# EUROPÄISCHE PATENTSCHRIFT

(11) **EP 0 679 832 B1**
(45) Veröffentlichungstag und Bekanntmachung des Hinweises auf die Patenterteilung: **23.09.1998**
(21) Anmeldenummer: 94106504.7
(22) Anmeldetag: 26.04.1994
(51) Int. Cl.: F16L 55/05

(54) **Vorrichtung zum Reduzieren von Druckpulsationen in Hydraulikleitungen**
Hydraulic line pressure oscillation reduction device
Dispositif de réduction de pulsations de pression dans conduits hydrauliques

(43) Veröffentlichungstag der Anmeldung: 02.11.1995
(73) Patentinhaber: Lüthin, Heinz, CH-5430 Wettingen (CH)
(72) Erfinder: Kurr, Klaus-Jürgen Dipl.-Ing., D-69469 Weinheim-Ho (DE)
(74) Vertreter: Troesch Scheidegger Werner AG

(56) Entgegenhaltungen:
- WO-A-93/09334
- DE-A- 2 742 920
- DE-A- 3 339 876
- DE-B- 2 549 367
- FR-A- 834 316
- FR-A- 2 611 023
- GB-A- 2 054 041
- US-A- 4 088 154

## Beschreibung

Die vorliegende Erfindung betrifft eine Vorrichtung zum Reduzieren von in einer Hydraulikleitung insbesondere durch eine Pumpe verursachte Druckpulsation mit einem Ausgleichsvolumen nach dem Oberbegriff von Anspruch 1, eine Servolenkungsanlage eines Kraftfahrzeuges mit einer Vorrichtung, ein Verfahren zur passiven Pulsationsreduzierung in einer hydraulischen Leitung sowie ein Verfahren zur aktiven Reduzierung eines Pulses respektive von Pulsationen in einer hydraulischen Leitung.

Die Kinematik der in Oelhydraulik-Kreisläufen meist eingesetzten hydrostatischen oder anderen Pumpen sowie die Betätigung von Armaturen, Ventilen und Stelleinrichtungen führt zu Schwingungen, die wesentliche Ursache unerwünschter Geräusche in hydraulischen Systemen sind. Weitere Folgen sind u.a. eine erhöhte festigkeitsmässige Beanspruchung der Rohrleitungen, deren Befestigungen sowie der angeschlossenen Verbraucher.

So erfolgt beispielsweise auch die Versorgung der Servolenkung und anderer hydraulischer Verbraucher in Kraftfahrzeugen über hydraulische Verdrängereinheiten. Diese erzeugen aufgrund des diskontinuierlichen Fördervorganges Druck- und Volumenstrompulsationen, die sich über das Hydraulikmedium im Leitungssystem fortpflanzen. Speziell bei Servolenkungen sind diese Pulsationen unerwünscht. Weitere Anregungen können über die Fahrbahn und das Rad in das Lenkgetriebe, beispielsweise in Form von Druckstössen, eingeleitet werden, was Auswirkungen auf die Fahrsicherheit hat.

Bislang werden überwiegend passive Dämpfer zur Minderung dieser Schwingungen eingesetzt, die allerdings sehr sorgfältig auf das System und die Frequenz der zu dämpfenden Schwingung abgestimmt werden müssen, da diese allenfalls gegenüber dem ungedämpften System sogar noch verstärkt werden können. So werden seit langem zur Minderung von Pulsationen passive Elemente, wie etwa Membranspeicher, eingesetzt, wobei allerdings bei diesen das Problem besteht, dass beim Auftreten eines grossen Pulses dieser vom Membranspeicher "geschluckt" wird und ein Weiterfliessen des Hydraulikmediums kurzfristig unterbrochen wird. Der Membranspeicher stellt damit eine grosse hydraulische Kapazität dar. Die Dämpfung von Pulsationen mit diesen Elementen ist beispielsweise in Lenkungen nicht möglich, da schnelle Druckänderungen beim Lenken vom Speicher "verschluckt" werden. Eine Lösung hierzu besteht beispielsweise durch Begrenzung des Ausschlages der im Speicher angeordneten Membrane. Diese Lösung wiederum funktioniert nur, falls die Membran vom statischen Druck entlastet wird.

Eine weitere Lösung stellen sogenannte Dehnschläuche dar, wie beispielsweise in der DE-33 39 876 vorgeschlagen.

Eine wiederum weitere Lösung wird in der GB-2 054 041 vorgeschlagen, in welcher ein sogenannter Kammerresonator für die Aufnahme von Pulsationen vorgeschlagen wird.

Wiederum weitere Lösungen stellen Reflexionsschalldämpfer, Stichleitungen, Speicher in Stichleitungen, durchflossene Speicher dar, wobei der Nachteil bei all den genannten Vorrichtungen darin besteht, dass entweder ein relativ grosses Einbauvolumen notwendig ist, die Dämpfung ungenügend ist oder aber eine hohe Volumenstromaufnahme bei Druckänderungen erfolgt. Zudem ist oft eine breitbandige Pulsationsminderung mit diesen Dämpfern nicht möglich.

Aus der FR-834 316 ist eine Vorrichtung bekannt, um in Flüssigkeitsdruckleitungen auftretenden Unterdruck und starken Ueberdruck aufzufangen bzw. auszugleichen. Aus diesem Grunde wird an der Leitung ein Teilstück mit einer gummielastischen Wandung versehen, welche Wandung auf ihrer Rückseite mit einem unter Ueberdruck stehenden Gas beaufschlagt ist.

Eine ähnliche Anordnung beschreibt die US-4 088 154, in welcher wiederum entlang einer Flüssigkeitsleitung eine längs ausgedehnte und in Kommunikation mit dieser Leitung stehende Ausgleichskammer vorgesehen ist, welche eine elastische Wandung aufweist. Diese Ausgleichskammer selbst ist in einem festen Gehäuse 50 angeordnet und innerhalb des Gehäuses aussen herum mit einem Gasdruck beaufschlagt. Dieser Gasdruck wird mittels einer automatisch geregelten Steuerung eingestellt, in Abhängigkeit von Druckfluktuationen in der Flüssigkeitsleitung.

Beide vorab genannten Vorrichtungen erscheinen eher ungeeignet im Zusammenhang mit der Kompensation von Druckpulsationen in Hydraulikleitungen, da sie einerseits zu träge sind und anderseits einen relativ komplizierten Aufbau mit sich bringen.

In der DE-25 49 367 wird eine Vorrichtung zur Entlastung einer Rohrleitung für Flüssigkeiten von Druckstössen beschrieben. Die beschriebene Vorrichtung ist nur geeignet für das Ausgleichen von erhöhten Druckstössen und nicht zum Ausgleichen von Unterdruck. Bei Auftreten von Ueberdruck wird ein Ventil geöffnet, um aus der Rohrleitung Flüssigkeit abzulassen, was insbesondere bei Hydraulikleitungen, z.B. bei Servolenkungsanlagen, ungeeignet ist, da damit ein Flüssigkeitsverlust verbunden ist. Zudem öffnet sich dieses Ventil erst bei einem gewissen Ueberdruck, und die Ventilsteuerung ist wiederum sehr kompliziert aufgebaut mit Speicherbehälter, Drossel, Sperrbehälter, Sperrflüssigkeit usw., was insbesondere im Fahrzeugbereich ungeeignet ist.

In der EP-A-0 633 400 schliesslich wird ein adaptiver, hydropneumatischer Pulsationsdämpfer beschrieben, welcher für pulsationsbehaftete Hydrauliksysteme mit stark wechselndem Betriebsdruck vorgeschlagen wird und welcher eine hydraulisch steife Kopplung zwischen einer Druckquelle und einem Verbraucher eines Hydrauliksystems ermöglicht. Dabei wird vorgeschlagen, die Dämpfungsmembran des adaptiven Pulsationsdämpfers an der dem zu dämpfenden Hydraulikmedium entgegengesetzten Oberfläche mit demselben Druck zu beaufschlagen, welcher im Hydraulikmedium selbst vorherrscht.

Es ist eine Aufgabe der vorliegenden Erfindung, eine Vorrichtung zum Reduzieren von Druckpulsationen und von Druckstössen in Hydraulikleitungen vorzuschlagen, welche ein relativ kleines Einbauvolumen beansprucht, einfach und kostengünstig in der Herstellung ist und zudem nicht zu einer hohen Volumenstromaufnahme bei zu grossen Druckänderungen führt.

Erfindungsgemäss wird die genannte Aufgabe mittels einer Vorrichtung nach Anspruch 1 oder 2 bzw. nach einem Verfahren nach einem der Ansprüche 11 oder 12 gelöst.

Vorgeschlagen wird eine Vorrichtung zum Reduzieren von in einer Hydraulikleitung insbesondere durch eine Pumpe verursachte Druckpulsation mit einem Ausgleichsvolumen, welches mit der Leitung verbunden ist und welches Volumen eine verschiebliche Wandung aufweist. Diese verschiebliche Wandung ist an der dem Volumen entgegengesetzten Oberfläche mit einem Gegendruck beaufschlagt, der wenigstens nahezu dem mittleren Druck in der Hydraulikleitung entspricht. Diese verschiebliche Wandung ist dazu vorgesehen, die beispielsweise durch die Pumpe verursachten Druckpulsationen aufzunehmen bzw. auszugleichen. Der Ausschlag der Membran wird z.B. mechanisch begrenzt, so dass sehr schnelle Änderungen des statischen Druckes (z.B. beim schlagartigen Lenken) aufgebracht werden können und das Medium nicht nur in den Dämpfer, sondern auch in das Stellglied (Lenkgetriebe) fliesst.

Damit soll die Vorrichtung bzw. die verschiebliche Wandung den statischen Anteil des Druckes übertragen, den Wechselanteil des Druckes hingegen mindern bzw. dämpfen. Aus diesem Grunde ist die Wandung an der dem Ausgleichsvolumen entgegengesetzten Wandung mit einer Kraft multipliziert mit der druckbeaufschlagten Membranfläche beaufschlagt, welche dem mittleren statischen Systemdruck entspricht. So muss die Wandung keine Wege zurücklegen, um den statischen Druck zu kompensieren. Wäre sie nicht druckentlastet, wie erfindungsgemäss vorgeschlagen, müsste sie sehr grosse Wege zurücklegen.

Damit nun nicht, wie beispielsweise bei Membranen im Stande der Technik bekannt, bei relativ hohen Pulsen eine hohe Volumenstromaufnahme erfolgt und somit der Hydraulikmediumfluss durch die Leitung gestoppt wird, wird weiter vorgeschlagen, dass an der entgegengesetzten Oberfläche der verschieblichen Wandung eine weitere, Federanordnung, wie beispielsweise eine weiche Feder, angeordnet ist, welche zunehmend gegen die Wandung wirkt, wenn die Wandung infolge einer auftretenden Pulsation volumenvergrössernd verschoben wird.

Damit die Kompensation des statischen Druckes an der verschieblichen Wandung möglichst optimal erfolgt, ist eine sogenannte selbsteinstellende Entlastung der verschieblichen Wandung vorgesehen, um, wie erwähnt, die Wandung vom statischen Anteil des Druckes in der Leitung bzw. dem Ausgleichsvolumen zu entlasten. Dazu ist die Rückseite der weiteren Federanordnung bzw. der weichen Feder über eine Druckausgleichsleitung mit der Leitung oder dem Ausgleichsvolumen oder einer externen Druckquelle verbunden, um das Hydraulikmedium an die Rückseite der weiteren Federanordnung bzw. der weichen Feder zu führen.

Weitere bevorzugte Ausführungsvarianten der erfindungsgemässen Vorrichtung sind in den abhängigen Ansprüchen 3 bis 10 beansprucht.

Weiter wird eine hydraulische Anlage, wie insbesondere eine Servolenkungsanlage eines Kraftfahrzeuges vorgeschlagen, beinhaltend eine erfindungsgemässe Vorrichtung zur passiven oder aktiven Pulsationsreduzierung.

Zur passiven Pulsationsreduzierung in einer hydraulischen Leitung wird ein Verfahren vorgeschlagen, gemäss welchem der in der Leitung sich fortpflanzende Puls bzw. der Volumenstrom in einem Ausgleichsvolumen auf eine verschiebliche Wandung oder eine Membran geführt wird, welche von der Gegenseite mit einem Gegendruck beaufschlagt ist, der nahezu dem mittleren bzw. dem statischen Druck in der Leitung bzw. dem Ausgleichsvolumen entspricht.

Zur aktiven Reduzierung eines Pulses in einer hydraulischen Leitung wird analog ein Verfahren vorgeschlagen, gemäss welchem in einem mit der Leitung verbundenen Ausgleichsvolumen mit verschieblicher Wandung diese Wandung derart pulsartig verschoben wird, dass ein zweiter Puls erzeugt wird, der derart phasenverschoben zum ersten Puls überlagert in die Leitung übertragen wird, dass sich die beiden Pulse wenigstens nahezu aufheben, oder dass die Membran aktiv derart verschoben oder bewegt wird, dass die Pulsation vermindert wird.

Die Erfindung wird nun anschliessend beispielsweise und unter Bezug auf die beigefügten Figuren näher erläutert.

Dabei zeigen:
- Fig. 1: schematisch im Querschnitt Aufbau und Funktion eines erfindungsgemässen passiven Pulsationsdämpfers;
- Fig.2a bis 2d: schematisch im Querschnitt dargestellt eine bevorzugte Ausführungsvariante eines passiven Pulsationsdämpfers, angeordnet in einer Abzweigung einer Leitung;
- Fig.3a bis 3c: die Anordnung eines passiven Pulsationsdämpfers, der vom Hydraulikmedium durchflossen wird;
- Fig.4a bis 4c: einen erfindungsgemässen passiven Pulsationsdämpfer, bei welchem das Hydraulikmedium direkt auf die Ausgleichsmembrane geleitet wird;
- Fig. 5: schematisch dargestellt in Diagrammform Aufbau und Funktion eines erfindungsgemässen aktiven Pulsationsdämpfers und
- Fig.6a und 6b: schematisch dargestellt im Querschnitt den Aufbau einer Ausführungsvariante eines aktiven Pulsationsdämpfers.

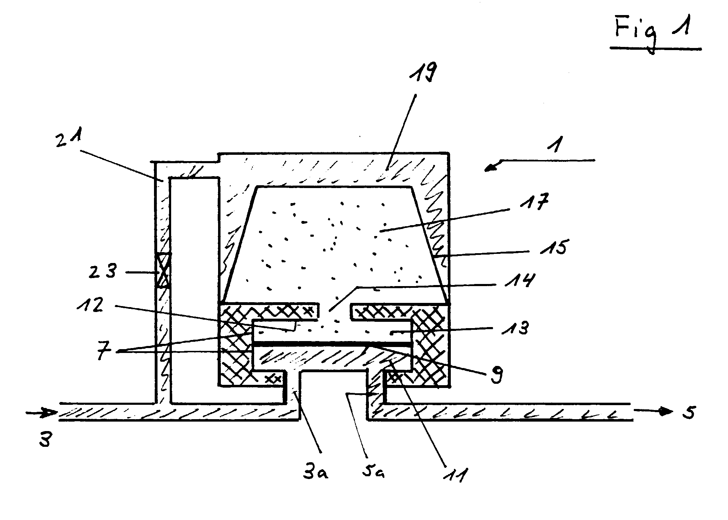

In Fig. 1 ist vereinfacht schematisch und im Querschnitt ein erfindungsgemässer passiver Pulsationsdämpfer dargestellt, beispielsweise geeignet für den Einbau in ein Hydraulikleitungssystem einer Servolenkung von einem Kraftfahrzeug. Der erfindungsgemässe Pulsationsdämpfer ist gemäss Fig. 1 dabei derart in eine Hydraulikleitung bzw. zwischen einem Zufluss 3 und einem Abfluss 5 oder im Abzweig einer Hydraulikleitung angeschlossen, dass die Leitung über Anschlussleitungen 3a bzw. 5a mit dem Pulsationsdämpfer verbunden ist. Diese Anschlussleitungen 3a bzw. 5a münden in eine Ausgleichskammer 7, welche mittig durch eine Membran 9, wie beispielsweise eine Metallmembran, ein Elastomer oder eine verschiebliche Wandung in ein Hydraulikausgleichsvolumen 11 und ein gegenüberliegendes Druckausgleichsvolumen 13 getrennt wird.

Ueber Oeffnungen 14 ist das Druckausgleichsvolumen 13 mit einem Gasvolumen 17 innerhalb einer Speichermembran 15 verbunden. Gasvolumen 17 und Speichermembran 15 bilden eine sogenannte Gasfeder. Selbstverständlich ist es möglich, anstelle dieser Gasfeder auch eine mechanische Feder oder andere Federelemente zu verwenden.

Die Speichermembran 15 ist aussen beaufschlagt durch ein Druckausgleichs- bzw. Entlastungsvolumen 19, welches beispielsweise über eine Druckausgleichsleitung 21 und eine Drossel 23 mit der Zuflussleitung 3 oder dem Ausgleichsvolumen 11 verbunden ist. Dadurch wird sichergestellt, dass im Oelvolumen 19 weitgehendst derselbe mittlere Druck vorliegt wie in den Leitungen 3 und 5 oder dem Ausgleichsvolumen 11. Dadurch entfällt beim Nichtauftreten von Pulsationen die Notwendigkeit des Stutzens der Membrane 9 von der dem Ausgleichsvolumen 11 entgegengesetzten Seite 13.

Durch diese Auslegung des Pulsationsdämpfers ergibt sich eine sogenannte adaptive bzw. selbsteinstellende Entlastung, wodurch der Wechselanteil des Druckes im mit Medium gefüllten Entlastungsvolumen 19 eliminiert oder gemindert und nur der statische Anteil des Druckes auf die Feder aufgeschaltet wird. Erhöht sich beispielsweise der statische Druck in der Zuleitung 3 bzw. 3a, nimmt der Druck im Ausgleichsvolumen 11 zu, die Membran 15 wird ausgelenkt und das Gasvolumen 17 bzw. 13 komprimiert, bis ein Kräftegleichgewicht eingetreten ist. Somit wird die Membran 9 vom statischen Anteil des Druckes entlastet.

Zur Entlastung könnte natürlich der Druck im Medium im Entlastungsvolumen 19 auch extern aufgebaut werden, beispielsweise über eine weitere Pumpe. Auch ist es möglich, das Entlastungsvolumen 19 statt mit der Leitung 3 direkt mit dem Ausgleichsvolumen 11 zu verbinden.

Die Funktionsweise dieses Pulsationsdämpfers 1 besteht darin, dass eine in der Zufuhrleitung 3 sich fortpflanzende Pulsation über den Zuleitungsabschnitt 3a in das Ausgleichsvolumen 11 gelangt. Durch die Pulsation wird die verschiebliche Wandung oder Membrane 9, wie beispielsweise eine Metallmembrane, gegen das darüberliegende Gasvolumen 13 ausgelenkt, wodurch der Puls weitgehendst absorbiert wird. Somit verlässt das Hydraulikmedium bzw. das Hydrauliköl das Ausgleichsvolumen über das Verbindungsleitungsstück 5a zur Abflussleitung 5 weitgehendst pulsationsfrei.

Wenn nun ein sehr grosser Puls in das Ausgleichsvolumen 11 eintritt, wird entsprechend die Metallmembrane 9 stark gegen das gasseitige Volumen getrieben. Damit nun der Volumenstrom nicht gänzlich im Pulsationsdämpfer absorbiert wird und somit ein Weiterfliessen des Hydraulikmittels unterbrochen wird, wird einerseits in der Gasfeder 15 bzw. im Gasvolumen davon 17 ein erhöhter Druck aufgebaut, wodurch ein progressiv ansteigender Gegendruck gegen die Membrane gasseitig aufgebaut wird. Zudem ist der Auslenkungsweg der Metallmembrane 9 durch den oberen Anschlag 12 begrenzt, so dass bei einem sehr grossen Puls nicht der ganze Puls durch die Membrane absorbiert werden kann.

Damit das Druckausgleichsvolumen 19 nicht ebenfalls den Pulsationen ausgesetzt ist, ist in der Druckausgleichsleitung 21 eine Drossel 23 angeordnet. Statt einer Drossel 23 kann auch die Druckausgleichsleitung 21 sehr dünn ausgebildet sein, damit nicht eine Uebertragung der Pulsationen in das Druckausgleichsvolumen 19 stattfindet. Dies ist wichtig, da ansonsten im Pulsationsdämpfer eine Ueberlagerung der Pulse auftreten kann, so dass die Pulsationen nicht gedämpft, sondern eher noch verstärkt werden.

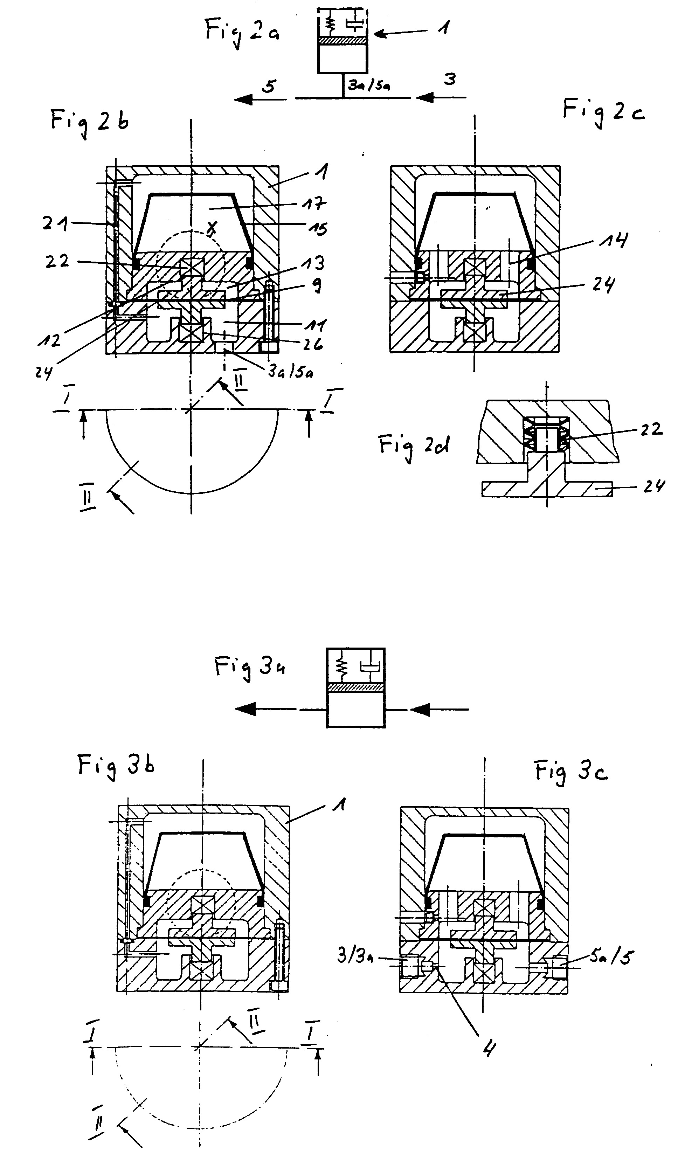

In den Fig. 2a bis 2d ist eine Ausführungsvariante eines passiven Pulsationsdämpfers dargestellt, welcher in einer Abzweigung der Hydraulikleitung angeordnet ist, in welcher Leitung Pulsationen zu dämpfen sind. Dabei zeigt Fig. 2a schematisch diese Anordnung, wobei der passive Pulsationsdämpfer 1 über die Verbindungsleitung 3a/5a mit der Hauptleitung 3 respektive 5 verbunden ist.

Fig. 2b zeigt den erfindungsgemässen Pulsationsdämpfer im Querschnitt entlang der Linie I-I, währenddem Fig. 2c denselben Pulsationsdämpfer wiederum im Querschnitt verdreht dazu entlang der Linie II-II zeigt. Analoge Teile in der in Fig. 2 dargestellten Ausführungsform sind mit denselben Bezugszahlen versehen wie diejenigen Teile aus Fig. 1. Das Ausgleichsvolumen 11 ist durch die Anordnung des Pulsationsdämpfers 1 an einem Abzweig der Leitung 3, 5 nur mit einem Zu- bzw. Abfluss 3a bzw. 5a versehen. In Abänderung zur Membran 9 in Fig. 1 ist die Membrane 9 in Fig. 2b zusätzlich abgefedert, beispielsweise durch das Anordnen von Tellerfedern 22, welche zusätzlich Führungen aufweisen, um in Führungen 26 geführt zu sein. Ausschnitt X aus Fig. 2b ist im Detail in Fig. 2d dargestellt, um das Anordnen dieser Zusatzfedern 22 besser darstellen zu können.

Damit kann verhindert werden, dass die Membrane 9 bei schlagartigen Druckänderungen, wie beispielsweise bei raschem Einschlagen eines Lenkrades, übermässig ausgelenkt wird. Diese Hubbegrenzung beispielsweise über die Tellerfedern kann ergänzt werden durch eine mechanische Hubbegrenzung, beispielsweise indem der Teller 24 gegen den unteren Rand 12 des Gehäuses des Pulsationsdämpfers 1 stösst. Die Federsteifigkeit der Zusatz federn 22 sollte klein sein und die Teller sehr leicht, damit eine breitbandige Pulsationsdämpfung ermöglicht wird. Die Dämpfung nimmt bei konstanter Frequenz bei steigendem Druck ab, da dann die Membran 15 der Gasfeder sehr stark ausgelenkt wird und das Gas in den Volumen 13 bzw. 17 komprimiert wird. Dies führt zu einer Verhärtung des Gases und zu einer grösseren Federsteifigkeit des Gases. Wird die Masse der Teller 24 sowie die Federsteifigkeit der Federn 22 erhöht, kann der Dämpfer als Tilger wirken. Kennzeichen dieses Tilgers ist, dass dieser in einem schmalen Frequenzband sehr stark dämpfend wirkt.

In den Fig. 3a bis 3c ist ein analoger Pulsationsdämpfer 1 dargestellt, wobei der Dämpfer selbst vom Hydraulikmedium durchflossen wird. Somit mündet die Zufuhrleitung 3 direkt über den Anschluss 3a in das Ausgleichsvolumen 11, wobei in der Ausführung gemäss Fig. 3a bis 3c zusätzlich beim Einlass eine Drossel 4 vorgesehen ist. Mit der Drossel 4 kann eine weitere Verbesserung der Pulsationsminderung erzielt werden. Die übrigen Elemente des dargestellten Pulsationsdämpfers sind identisch mit denjenigen des Pulsationsdämpfers, dargestellt in den Fig. 2a bis 2d.

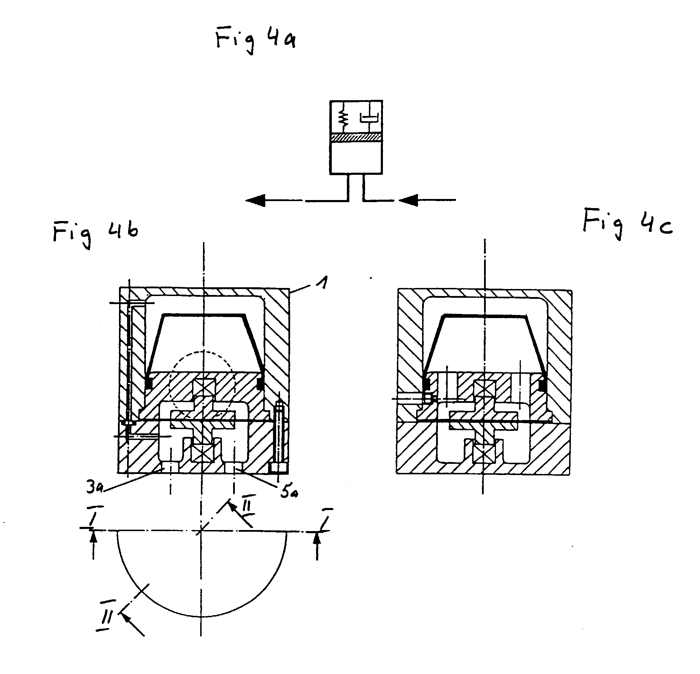

In den Fig. 4a bis 4c ist ein weiterer passiver Pulsationsdämpfer dargestellt, weitgehendst analog denjenigen von den Fig. 2 und 3, wobei aber das Hydraulikmedium auf die Wandung bzw. die Membran 9 geleitet wird. Im Prinzip entspricht der Pulsationsdämpfer von Fig. 4a bis 4c demjenigen von Fig. 1, mittels letzterem die generelle Funktionsweise eines passiven Pulsationsdämpfers erklärt worden ist.

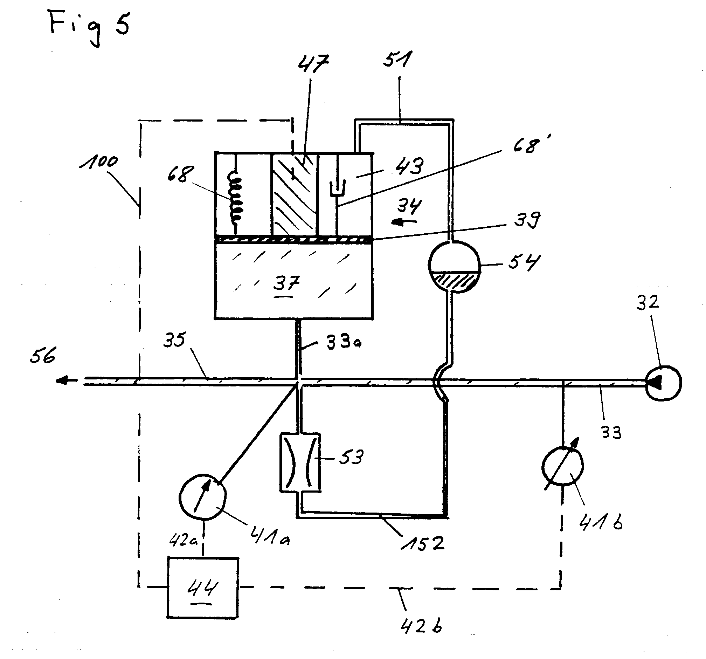

Im Gegensatz zu den in den Fig. 1 bis 4 dargestellten passiven Pulsationsdämpfern ist nun in Fig. 5 schematisch ein aktiver Pulsationsdämpfer 31 dargestellt. Von einer Pumpe 32, wie beispielsweise einer Verdrängerpumpe, Kolbenpumpe, Flügelzellenpumpe, Zahnradpumpe, einer sogenannten sauggedrosselten Pumpe etc., wie sie üblicherweise in hydraulischen Systemen beispielsweise für Servolenksteuerungen im Fahrzeugbereich verwendet werden, wird ein Puls erzeugt, welcher sich entlang der Hydraulikleitung 33 fortbewegt. Im Gegensatz zu den Pulsationsdämpfern gemäss Fig. 1 bis 4 wird gemäss der im Schema von Fig. 5 dargestellten Figur der Puls in Leitung 33 resp. 35 aktiv gedämpft. Zu diesem Zwecke ist ein sogenannter Aktor 34 vorgesehen, mittels welchem aktiv ein weiterer Puls erzeugt wird, der über eine Verbindungsleitung 33a der Hydraulikleitung 33 zugeführt wird, um den ersten Puls, erzeugt durch die Pumpe 32, kompensierend zu überlagern, damit in der Abflussleitung 35 durch das gegenseitige Aufheben der beiden Pulse sich keine Pulsationen mehr zur Servolenkung fortpflanzen.

Grundsätzlich ist der Aktor 34 ähnlich dem Pulsationsdämpfer 1 aus Fig. 2 aufgebaut, indem erneut die Verbindungsleitung 33a von der Leitung 33 in ein Ausgleichsvolumen 37 im Aktor 34 mündet. An diesem Ausgleichsvolumen 37 anliegend, ist eine verschiebliche Wandung bzw. eine Membran 39 angeordnet, welche an ihrer Gegenseite mit einem Druckausgleichsvolumen 43 beaufschlagt ist. Dieses beispielsweise ein Gas beinhaltendes Druckausgleichsvolumen 43 ist über eine Druckausgleichsleitung 51 mit einem Membranspeicher 54 verbunden, welcher Membranspeicher 54 über eine weitere Verbindungsleitung und eine Drossel 53 mit der Primärhydraulikleitung 33 verbunden ist. Somit ist die Membrane 39 im Aktor 34 beim Nichtauftreten von Pulsationen durch das beidseitige Beaufschlagen mittels desselben Druckes im Gleichgewicht, wodurch keine Bewegung stattfindet, d.h., der Aktor ist in sich entlastet, und der statische Druckanteil muss nicht kompensiert werden.

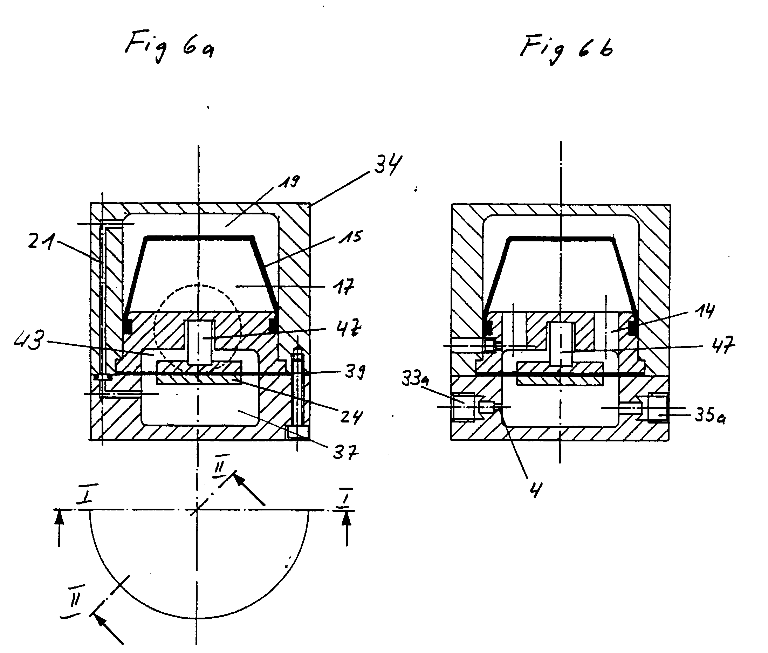

Statt der Entlastung der Membran 39 mittels Membranspeicher 54 kann eine Entlastung auch über das Ausgleichsvolumen 19, die Membran 15 und die weiche Feder 17 (beispielsweise Gas) erfolgen (s. Fig. 6a und 6b).

Die Membrane 39 bzw. die verschiebliche Wandung ist nun nicht dazu vorgesehen, um Pulsationen aufzunehmen, sondern um selbst Pulsationen zu erzeugen. Dies erfolgt mittels eines Betätigungsorgans 47. Das Betätigungsorgan 47 ist mit einem Steuermechanismus 44 verbunden, welcher Steuermechanismus 44 über eine Verbindungsleitung 42a bzw. 42b mit einem Sensor 41a bzw. einem Sensor 41b verbunden ist, mittels welchem in der Leitung 33 Pulsationen erfasst werden.

Wenn nun von der Pumpe 32 ein Puls erzeugt wird, welcher sich entlang der Leitung 33 fortpflanzt, so wird dieser Puls durch den Sensor 41a und/oder den Sensor 41b erfasst. Der Sensor 41a und/oder 41b sendet ein entsprechendes Signal über Grösse des Pulses an eine Steuerung 44, welche Steuerung das Betätigungsorgan 47 entsprechend den empfangenen Signalen mittels eines Stellsignals steuert bzw. betätigt. Mittels des Betätigungsorgans 47 wird im Aktor die verschiebliche Wandung 39 pulsartig verschoben, wodurch im Ausgleichsvolumen 37 bzw. durch die Verbindungsleitung 33a ein sich fortpflanzender weiterer Puls erzeugt wird. Die Amplitude dieses Pulses ist derart, dass beim Aufeinandertreffen der beiden Pulse bei der Verbindung der beiden Leitungen 33a und 33 sich diese gegenseitig aufheben. Dadurch ist der Hydraulikölstrom im Abfluss 35 weitgehendst pulsationsfrei.

Natürlich ist es aber auch möglich, dass das aktive Element, die Membran 39 im Aktor 34, derart bewegt wird, dass ein sich in der Leitung 33 fortpflanzender Puls quasi absorbiert wird. Die Membrane wird im Falle einer Druckerhöhung nicht Ausgleichsvolumen-verringernd pulsartig bewegt, sondern umgekehrt, wodurch das Ausgleichsvolumen 37 vergrössert wird und der Puls auf diese Art und Weise in der Leitung 33 eliminiert wird.

Beim Aktor 34 kann es sich beispielsweise um einen elektromagnetischen Aktor handeln, womit die Betätigungsorgane 47 Magnete bzw. Magnetspulen sind, welche für die pulsartige Bewegung der Membrane 39 verantwortlich sind. Beim Betätigungsorgan 47 kann es sich aber auch um ein sogenanntes Piezo-Stellglied handeln. Die Wege beider angeführter Aktormöglichkeiten können bei Bedarf mechanisch, beispielsweise mittels eines Hebels, oder hydraulisch übersetzt werden. Der Aktor kann entweder direkt (Kolben) oder über eine Membrane 39, wie in Fig. 5 dargestellt, auf das Hydraulikmedium im Ausgleichsvolumen 37 wirken.

In den Fig. 6a und 6b, schlussendlich, ist ein Aktor 34 im Schnitt dargestellt, wobei er im wesentlichen konstruktiv dem Pulsationsdämpfer, dargestellt in den Fig. 3a bis 3c, entspricht. Der Aktor 34 ist im Gegensatz zum Aktor dargestellt in Fig. 5 derart in der Leitung 33 bzw. 35 angeordnet, dass er von dem Hydraulikmedium durchflossen wird. Entsprechend umfasst der Aktor 34 einen Anschluss 33 für das Einfliessen des Mediums, welcher Anschluss beispielsweise über eine Drossel 4 in das Ausgleichsvolumen 37 mündet. An der entgegengesetzten Seite ist ein Anschluss 35a für das Abführen des Hydraulikmediums vorgesehen.

Da der Aktor 34 ein aktives Pulsationsdämpfungselement darstellt, ist entsprechend die Membrane 39 mit einem Betätigungsorgan 47 verbunden, wie beispielweise ein Magnet mit Spulen oder ein Piezo-Stellglied.

Analog zum Pulsationsdämpfer der Fig. 3a bis 3c ist wiederum eine Gasfeder 15-17 vorgesehen, welche an ihrer Rückseite mit einem Druckausgleichsvolumen 19 beaufschlagt ist, welches Volumen über eine Druckausgleichsleitung mit dem Ausgleichsvolumen 37 verbunden ist. Die Membrane 39 kann ebenfalls mit einer beliebigen Feder 24 gekoppelt sein.

Aufgrund der dargestellten Konstruktion ist der Aktor 34 adaptiv entlastet.

Die Regelung bzw. Steuerung des Aktors 34 erfolgt analog wie oben unter Bezug auf Fig. 5 beschrieben folgendermassen: Der Sensor 41a und/oder 41b erfasst (erfassen) die Störung (Regelgrösse), deren dynamischer Wechselanteil zu eliminieren ist. Der Rechner 44 vergleicht diese Grösse mit dem SOLL-Signal und berechnet hieraus die Regelabweichung. Mit dieser berechnet der Regelalgorithmus bzw. Steueralgorithmus die Stellgrösse, die auf den Aktor 34 bzw. das Betätigungsorgan 47 aufgeschaltet wird und diesen regelt bzw. steuert. Zur Verbesserung der Regelgüte kann die Störung mit dem Sensor 41b (Druck oder Volumenstromsensor) gemessen werden und mit einer Störgrössenaufschaltung die Stellgrösse berechnet werden. Dabei gibt der Regelsteuermechanismus das berechnete Stellsignal über die Verbindungsleitung 100 an das Betätigungsorgan 47.

Bei den in den Fig. 1 bis 6 dargestellten erfindungsgemäss beschriebenen Pulsationsdämpfern handelt es sich selbstverständlich nur um Beispiele, welche zur näheren Erläuterung der Erfindung dienen sollen. Diese Pulsationsdämpfer können auf verschiedenste Art und Weise modifiziert, ergänzt oder abgeändert werden. So ist es zum Beispiel erfindungsgemäss nicht wesentlich, aus welchen Materialien die diversen Elemente sowohl des Dämpfers in den Fig. 1 bis 4 wie auch des Aktors in den Fig. 5 und 6 hergestellt werden. Es ist möglich, die einzelnen Elemente aus Metallen, wie rostfreiem Stahl, Aluminium und dergleichen, oder geeigneten Kunststoffen herzustellen. Insbesondere die Membrane oder die Gasfeder in den Fig. 1 bis 4 und Fig. 6 können sowohl aus Metall wie auch aus Kunststoff oder Elastomer hergestellt werden, währenddem beispielsweise die Aktorplatte 39 in den Fig. 5 und 6 vorzugsweise aus Metall hergestellt ist.

In bezug auf die Gasfeder ist auch zu ergänzen, dass prinzipiell jede weitere mögliche Feder, wie Elastomerfeder oder Metallfeder, hierzu verwendet werden kann. Auch die Druckbeaufschlagung der Feder an ihrer Rückseite kann auf verschiedenste Art und Weise erfolgen, sei dies durch Verbinden mit der Hydraulikleitung, dem Ausgleichsvolumen im Pulsationsdämpfer, über Membranspeicher oder durch externen Druckaufbau. Auch das Versehen der verschieblichen Wandung bzw. Membran 9 bzw. 39 mit Zusatzfedern und Zusatzmassen ist fakultativ und empfiehlt sich immer dann, wenn eine möglichst schmalbandige Pulsationsdämpfung erzeugt werden soll.

Erfindungswesentlich ist, dass die Aktorplatte bzw. Membrane oder, ganz generell, die verschiebliche Wandung an der dem Hydraulikmedium-Ausgleichsvolumen entgegengesetzten Seite mit einem Gegendruck beaufschlagt ist, der dem mittleren Druck in der Hydraulikleitung entspricht. Durch diese Massnahme wird gegenüber allen im Stande der Technik bekannten Einrichtungen sichergestellt, dass der Dämpfer günstig dimensioniert werden kann und zudem einen relativ einfachen Aufbau aufweisen kann, indem die verschiebliche Wandung zur Aufnahme der Pulse in der Ausgangsposition im Gleichgewicht gehalten wird.

Hierdurch wird der statische Anteil des Druckes auf die Membrane bzw. verschiebliche Wandung kompensiert, so dass diese vom statischen Anteil des Druckes entlastet ist. Auf die Membran wirken nur die Wechseldrücke (Pulsationen). Durch die Entlastung wird sichergestellt, dass die Membran mittig im Gleichgewicht gehalten wird. Sie führt lediglich dann Bewegungen aus, wenn Pulsationen gemindert/kompensiert werden sollen.

## Patentansprüche

1. Vorrichtung zum passiven Reduzieren von in einer Hydraulikleitung insbesondere durch eine Pumpe verursachte Druckpulsationen mit einem Ausgleichsvolumen (11, 37), welches mit der Leitung verbunden ist und welches Volumen eine verschiebliche Wandung (9, 39) aufweist, wobei die verschiebliche Wandung an der dem Volumen entgegengesetzten Oberfläche mit einem Gegendruck beaufschlagt ist, der nahezu dem mittleren Druck in der Leitung bzw. dem Ausgleichsvolumen (3, 33, 11, 37) entspricht, dadurch gekennzeichnet, dass zum passiven Reduzieren an der verschieblichen Wandung eine zusätzliche Federanordnung (22) und eine Masse (24) vorgesehen sind, die gemeinsam ein schwingungsfähiges System bilden, um eine breitbandige oder schmalbandige Pulsationsdämpfung zu erzielen, wobei die zusätzliche Federanordnung keine Gasfeder ist.

2. Vorrichtung zum aktiven Reduzieren von in einer Hydraulikleitung, insbesondere durch eine Pumpe verursachte Druckpulsation mit einem Ausgleichsvolumen (11, 37), welches mit der Leitung verbunden ist und welches Volumen eine verschiebliche Wandung (9, 39) aufweist, wobei die verschiebliche Wandung an der dem Volumen entgegengesetzten Oberfläche mit einem Gegendruck beaufschlagt ist, der nahezu dem mittleren Druck in der Leitung bzw. dem Ausgleichsvolumen (3, 33, 11, 37) entspricht, dadurch gekennzeichnet, dass zum aktiven Reduzieren Mittel (47) zum aktiven Betätigen der verschieblichen Wandung (39) vorgesehen sind, um einen den Puls in der Leitung entgegengesetzten zweiten Puls zu erzeugen, wodurch sich die beiden Pulse wenigstens nahezu aufheben, oder um einen Unterdruck zu erzeugen, um den einen Pulsstoss zu eliminieren.

3. Vorrichtung nach Anspruch 1, dadurch gekennzeichnet, dass die verschiebliche Wandung (9, 39) eine Metallmembran ist oder aus einem Elastomer gefertigt ist.

4. Vorrichtung nach einem der Ansprüche 1 oder 3, dadurch gekennzeichnet, dass die verschiebliche Wandung, wie die Membran (9, 39) durch das Anordnen von Tellerfedern (22) als zusätzliche Federanordnung abgefedert ist.

5. Vorrichtung nach einem der Ansprüche 1 oder 3, 4, dadurch gekennzeichnet, dass die zusätzliche Federanordnung (22) mechanisch hubbegrenzt ist.

6. Vorrichtung nach einem der Ansprüche 1 oder 3 bis 5, dadurch gekennzeichnet, dass das Ausgleichsvolumen (11, 37) in einer Abzweigung (3a, 33a, 5a, 35a) zur Leitung angeordnet ist oder vom Medium durchflossen wird und beim Einlass in das Ausgleichsvolumen eine Drossel (4) vorgesehen ist.

7. Vorrichtung nach einem der Ansprüche 1 oder 3 bis 6, dadurch gekennzeichnet, dass mit der entgegengesetzten Oberfläche eine weitere Federanordnung, wie beispielsweise eine sogenannte weiche Feder (15, 17) wirkverbunden ist, welche zunehmend gegen die Wändung (9, 39) wirkt, wenn die Wandung infolge einer auftretenden Pulsation Ausgleichsvolumen vergrössernd verschoben wird.

8. Vorrichtung nach einem der Ansprüche 1 oder 3 bis 7, dadurch gekennzeichnet, dass die entgegengesetzte Oberfläche über eine Leitung (14, 51) mit dem Ausgleichsvolumen (17, 54) verbunden ist, um mit dem mittleren Druck bzw. dem statischen Druck in der Leitung bzw. dem Ausgleichsvolumen beaufschlagt zu werden.

9. Vorrichtung nach einem der Ansprüche 7 oder 8, dadurch gekennzeichnet, dass eine selbsteinstellende Entlastung der verschieblichen Wandung (9, 39) vorgesehen ist, um die Wandung vom statischen Anteil des Druckes in der Leitung bzw. dem Ausgleichsvolumen zu entlasten, wobei die Rückseite der weiteren Federanordnung bzw. der weichen Feder (15, 17 oder 54) über eine Druckausgleichsleitung (21, 152) mit der Leitung oder dem Ausgleichsvolumen verbunden ist, um das Hydraulikmedium an die Rückseite der weiteren Federanordnung bzw. der weichen Feder zu führen.

10. Vorrichtung nach Anspruch 2, dadurch gekennzeichnet, dass das oder die Betätigungsmittel (47) ein oder mehrere Magnet(e) oder Piezo-Element(e) ist (sind), welche(s) an der Wandung angeordnet ist (sind), und dass weiter an der Leitung mindestens ein Sensor (41a, 41b) vorgesehen ist zum Erfassen eines Pulses bzw. der Pulsation in der Leitung, welcher Sensor oder welche Sensoren mit einer Steuerung bzw. einem Regler (44) verbunden ist (sind) zur Erzeugung eines Stellsignals an den Magneten (die Magnete) oder das Piezo-Element (die Piezo-Elemente), um den zur Kompensation des Pulses notwendigen zweiten Puls bzw. um eine Absorption des Pulses zu erzeugen.

11. Verfahren zur passiven Pulsationsreduzierung in einer hydraulischen Leitung mittels einer Vorrichtung nach einem der Ansprüche 1 oder 3 bis 9, dadurch gekennzeichnet, dass die Membran oder Wandung, an der eine zusätzliche Federanordnung (22) und eine Masse (24) vorgesehen sind, die gemeinsam mit der verschieblichen Wandung oder Membran ein schwingungsfähiges System bilden, an ihrer Gegenseite mit einer weiteren Federkraft beaufschlagt wird, wobei die Rückseite der die weitere Federkraft erzeugenden weichen Feder mit dem mittleren Druck des Ausgleichsvolumens bzw. der Leitung beaufschlagt wird, um an der verschieblichen Wandung bzw. Membran eine selbsteinstellende Entlastung zu erzeugen bzw. um die Wandung bzw. die Membran vom statischen Anteil des Druckes zu entlasten.

12. Verfahren zur aktiven Reduzierung eines Pulses in einer hydraulischen Leitung mittels einer Vorrichtung nach Anspruch 2 oder 10, dadurch gekennzeichnet, dass in einem mit der Leitung verbundenen Ausgleichsvolumen mit verschieblicher Wandung diese Wandung derart pulsartig verschoben wird, dass ein zweiter Puls erzeugt wird, der derart phasenverschoben zum ersten Puls überlagert in die Leitung übertragen wird, dass sich die beiden Pulse wenigstens nahezu aufheben, oder dass die Pulsation durch Verschieben der Membran im Ausgleichsvolumen gedämpft wird, so dass der erste Puls aus der Leitung absorbiert wird.

## Claims

1. Device for the passive reduction of pressure pulsations created in a hydraulic line, in particular by a pump, with a compensating volume (11, 37) which is connected to the line and which has a displaceable wall (9, 39), wherein a counterpressure acts on the displaceable wall at the surface opposite the volume, which counterpressure virtually corresponds to the mean pressure in the line or the compensating volume (3, 33, 11, 37), characterised in that, for passive reduction, an additional spring arrangement (22) and a mass (24) are provided at the displaceable wall and together form an oscillatory system in order to achieve broad-band or narrow-band pulsation damping, wherein the additional spring arrangement is not a pneumatic spring.

2. Device for the active reduction of pressure pulsations created in a hydraulic line, in particular by a pump, with a compensating volume (11, 37) which is connected to the line and which has a displaceable wall (9, 39), wherein a counterpressure acts on the displaceable wall at the surface opposite the volume, which counterpressure virtually corresponds to the mean pressure in the line or the compensating volume (3, 33, 11, 37), characterised in that, for active reduction, means (47) for actively actuating the displaceable wall (39) are provided in order to produce a second pulse opposite to the pulse in the line, whereby the two pulses at least virtually cancel each other, or in order to produce a negative pressure so as to eliminate one pulse surge.

3. Device according to claim 1, characterised in that the displaceable wall (9, 39) is a metal diaphragm or is made of an elastomer.

4. Device according to one of claims 1 and 3, characterised in that the displaceable wall, just like the diaphragm (9, 39), is cushioned by the arrangement of Belleville springs (22) as the additional spring arrangement.

5. Device according to one of claims 1 and 3, 4, characterised in that the travel of the additional spring arrangement (22) is mechanically limited.

6. Device according to one of claims 1 and 3 to 5, characterised in that the compensating volume (11, 37) is arranged in a branch (3a, 33a, 5a, 35a) to the line or the medium flows through it and a constriction (4) is provided at the inlet into the compensating volume.

7. Device according to one of claims 1 and 3 to 6, characterised in that a further spring arrangement such as, for example, a so-called soft spring (15, 17) is operatively connected to the opposite surface and increasingly acts against the wall (9, 39) when the wall is displaced due to a pulsation occurring so as to enlarge the compensating volume.

8. Device according to one of claims 1 and 3 to 7, characterised in that the opposite surface is connected via a line (14, 51) to the compensating volume (17, 4) in order that the mean pressure or the static pressure in the line or the compensating volume can act on it.

9. Device according to one of claims 7 and 8, characterised in that a self-adjusting relief of the displaceable wall (9, 39) is provided in order to relieve the wall of the static component of the pressure in the line or the compensating volume, wherein the rear side of the further spring arrangement or the soft spring (15, 17 or 54) is connected via a pressure-compensating line (21, 152) to the line or the compensating volume in order to convey the hydraulic medium to the rear side of the further spring arrangement or the soft spring.

10. Device according to claim 2, characterised in that the actuating means (47) is (are) one or more magnet(s) or piezoelectric element(s) which is (are) arranged at the wall, and that at least one sensor (41a, 41b) is also provided at the line to detect a pulse or the pulsation in the line, which sensor or sensors is (are) connected to a control or a regulator (44) to produce a control signal to the magnet (magnets) or the piezoelectric element (piezoelectric elements) in order to produce the second pulse required to compensate the pulse or absorb the pulse.

11. Method for passive pulsation reduction in a hydraulic line by means of a device according to one of claims 1 and 3 to 9, characterised in that a further spring force acts on the opposite side of the diaphragm or wall at which an additional spring arrangement (22) and a mass (24) are provided, which together with the displaceable wall or diaphragm form an oscillatory system, wherein the mean pressure of the compensating volume or the line acts on the rear side of the soft spring producing the further spring force in order to produce a self-adjusting relief at the displaceable wall or diaphragm or in order to relieve the wall or diaphragm from the static component of the pressure.

12. Method for the active reduction of a pulse in a hydraulic line by means of a device according to claim 2 or 10, characterised in that, in a compensating volume, which is connected to the line, with a displaceable wall, this wall is displaced in a pulsed manner such that a second pulse is produced which is transmitted to the line in superimposed fashion offset in phase with respect to the first pulse such that the two pulses at least virtually cancel each other, or that the pulsation is damped by displacing the diaphragm in the compensating volume, so that the first pulse is absorbed from the line.

## Revendications

1. Dispositif pour la réduction passive de pulsations de pression dans un conduit hydraulique, provoquées notamment par une pompe, avec un volume d'égalisation (11, 37) qui est relié au conduit et le volume présentant une paroi déplaçable (9, 39), la paroi déplaçable étant chargée à la surface opposée au volume d'une contre-pression qui correspond approximativement à la pression moyenne dans le conduit respectivement le volume d'égalisation (3, 33, 11, 37), caractérisé en ce que sont prévus pour la réduction passive à la paroi déplaçable un agencement supplémentaire à ressort (22) et une masse (24) qui forment conjointement un système apte à osciller pour obtenir un amortissement à bande large ou à bande étroite des pulsations, l'agencement à ressort additionnel n'étant pas un ressort pneumatique.

2. Dispositif pour la réduction active de pulsations de pression dans un conduit hydraulique, provoquées notamment par une pompe, avec un volume d'égalisation (11, 37) qui est relié au conduit et où le volume présente une paroi déplaçable (9, 39), où la paroi déplaçable est chargée à la surface opposée au volume d'une contre-pression qui correspond approximativement à la pression moyenne dans le conduit respectivement le volume d'égalisation (3, 33, 11, 37), caractérisé en ce que pour la réduction active, des moyens (47) sont prévus pour l'actionnement actif de la paroi déplaçable (39) pour produire une deuxième pulsation opposée à la pulsation dans le conduit par quoi les deux pulsations s'annulent au moins approximativement, ou bien pour produire une dépression pour éliminer un coup de pulsation.

3. Dispositif selon la revendication 1, caractérisé en ce que la paroi déplaçable (9, 39) est une membrane métallique ou est réalisée en un élastomère.

4. Dispositif selon l'une des revendications 1 à 3, caractérisé en ce que la paroi déplaçable, comme la membrane (9, 39) est supportée élastiquement par l'agencement de ressorts à disques (22) comme agencement additionnel à ressort.

5. Dispositif selon l'une des revendications 1 ou 3, 4, caractérisé en ce que l'agencement additionnel à ressort (22) est délimité mécaniquement dans sa course.

6. Dispositif selon l'une des revendications 1 ou 3 à 5, caractérisé en ce que le volume d'égalisation (11, 37) est disposé dans un branchement (3a, 33a, 5a, 35a) au conduit ou est traversé par le fluide, et qu'il est prévu à l'entrée dans le volume d'égalisation un papillon (4).

7. Dispositif selon l'une des revendications 1 ou 3 à 6, caractérisé en ce qu'il est relié activement à la surface opposée un agencement supplémentaire à ressort, comme par exemple un soi-disant ressort souple (15, 17) qui agit progressivement contre la paroi (9, 39) lorsque la paroi, à la suite d'une pulsation produite, est déplacée en agrandissant le volume d'égalisation.

8. Dispositif selon l'une des revendications 1 ou 3 à 7, caractérisé en ce que la surface opposée est reliée par un conduit (14, 51) au volume d'égalisation (17, 54) pour être chargée par la pression moyenne, respectivement la pression statique dans le conduit respectivement le volume d'égalisation.

9. Dispositif selon l'une des revendications 7 ou 8, caractérisé en ce qu'il est prévu une décharge automatique de la paroi déplaçable (9, 39) pour décharger la paroi de la part statique de la pression dans le conduit respectivement dans le volume d'égalisation, où le côté arrière de l'agencement supplémentaire à ressort respectivement du ressort souple (15, 17 ou 54) est relié par un conduit d'égalisation de pression (21, 152) au conduit ou au volume d'égalisation pour guider le fluide hydraulique au côté arrière de l'agencement supplémentaire à ressort respectivement du ressort souple.

10. Dispositif selon la revendication 2, caractérisé en ce que le ou les moyens d'actionnement (47) est (sont) un ou plusieurs aimant(s) ou piézo-élément(s) qui est (sont) disposé(s) à la paroi et en ce qu'il est prévu en outre au conduit au moins un capteur (41a, 41b) pour détecter une pulsation respectivement la pulsation dans le conduit, ce capteur ou ces capteurs étant reliés à une commande respectivement un réglage (44) pour produire un signal de positionnement à l'aimant (aux aimants) ou au piézo-élément (aux piézo-éléments) pour produire la deuxième pulsation nécessaire pour compenser la pulsation, respectivement pour produire une absorption de la pulsation.

11. Procédé pour la réduction passive de pulsations dans un conduit hydraulique au moyen d'un dispositif selon l'une des revendications 1 ou 3 à 9, caractérisé en ce que la membrane ou paroi à laquelle sont prévus un agencement supplémentaire à ressort (22) et une masse (24) qui forment ensemble avec la paroi déplaçable ou membrane un système apte à osciller, est sollicitée à son côté opposé d'une force de ressort additionnelle, le côté arrière du ressort souple produisant la force de ressort additionnelle étant chargé par la pression moyenne du volume d'égalisation respectivement du conduit pour produire à la paroi déplaçable respectivement membrane une décharge automatique, respectivement pour décharger la paroi respectivement la membrane de la part statique de la pression.

12. Procédé pour la réduction active d'une pulsation dans un conduit hydraulique au moyen d'un dispositif selon la revendication 2 ou 10, caractérisé en ce que dans un volume d'égalisation relié au conduit, avec une paroi déplaçable, cette paroi est déplaçable à la manière d'une pulsation de façon à produire une deuxième pulsation qui est transférée ainsi décalée en phase, superposée à la première pulsation, dans le conduit pour que les deux pulsations s'annulent au moins approximativement ou que la pulsation soit amortie par un déplacement de la membrane dans le volume d'égalisation de telle sorte que la première pulsation du conduit est absorbée.
